(19) Europäisches Patentamt
European Patent Office
Office européen des brevets

(11) **EP 1 478 560 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(21) Anmeldenummer: **02796569.8**

(22) Anmeldetag: **04.12.2002**

(51) Int Cl.⁷: **B62D 5/06**, B62D 5/04, B62D 6/00

(86) Internationale Anmeldenummer:
**PCT/EP2002/013722**

(87) Internationale Veröffentlichungsnummer:
**WO 2003/072417 (04.09.2003 Gazette 2003/36)**

(54) **FAHRZEUGLENKUNG MIT EINRICHTUNG ZUR VARIABLEN MITTENZENTRIERUNG**

STEERING MECHANISM OF A VEHICLE, COMPRISING A VARIABLE CENTERING DEVICE

DIRECTION DE VEHICULE COMPRENANT UN DISPOSITIF DE CENTRAGE VARIABLE

(84) Benannte Vertragsstaaten:
**DE FR GB**

(30) Priorität: **28.02.2002 DE 10208673**

(43) Veröffentlichungstag der Anmeldung:
**24.11.2004 Patentblatt 2004/48**

(73) Patentinhaber: **ThyssenKrupp Presta SteerTec GmbH**
**40476 Düsseldorf (DE)**

(72) Erfinder:
• **NIESSEN, Harwin**
  **73230 Kirchheim u. Teck (DE)**

• **STARBEK, Roman, Frank**
  **73733 Esslingen (DE)**

(74) Vertreter: **LENZING GERBER**
**Patentanwälte**
**Postfach 20 05 09**
**40103 Düsseldorf (DE)**

(56) Entgegenhaltungen:
**DE-A- 3 537 024          DE-A- 3 908 218**
**DE-A- 19 908 832        DE-C- 19 539 101**

**Beschreibung**

Die vorliegende Erfindung betrifft eine Fahrzeuglenkung mit einer Lenkhandhabe zur Lenkung von mindestens einem Rad, wobei die Fahrzeuglenkung eine Einrichtung zum Aufbringen eines Momentes auf die Lenkhandhabe sowie einen Sensor zur Ermittelung des von der das Fahrzeug lenkenden Person auf die Lenkhandhabe aufgebrachten Lenkmomentes $T_{driver}$ aufweist, wobei die Einrichtung ein Rückstellmoment $T_{return}$ erzeugt, welches eine Funktion $F(\varphi_{steer})$ des Lenkwinkels $\varphi_{steer}$ ist und das Rückstellmoment $T_{return}$ die Lenkhandhabe in eine Mittenstellung ($\varphi_{steer} = 0°$) treibt. Eine solche Lenkung ist zum Beispiel aus der DE3908218A bekannt.

Durch die Rückstellung der Fahrzeuglenkung wird ein eingelenktes Fahrzeug in eine Geradeausfahrt überführt. Eine selbsttätige exakte Mittenzentrierung durch die Fahrzeuglenkung selbst ist u.a. auch dann gewunscht, wenn die das Fahrzeug lenkende Person das Lenkrad nicht beruhrt bzw. nur mit einer sehr kleinen Kraft beaufschlagt.

Bei der Realisierung einer Fahrzeuglenkung mit aktiver Rückstellung ergeben sich nach heutigem Realisierungstand immer zwei Zielkonflikte, die die Generierung des Rückstellmomentes betreffen. So muß die Fahrzeuglenkung einerseits eine gute Mittenzentrierung mit minimalem Restwinkel aufweisen und andererseits ein harmonisches Lenkgefühl insbesondere beim Lenken durch die Mittenstellung vermitteln.

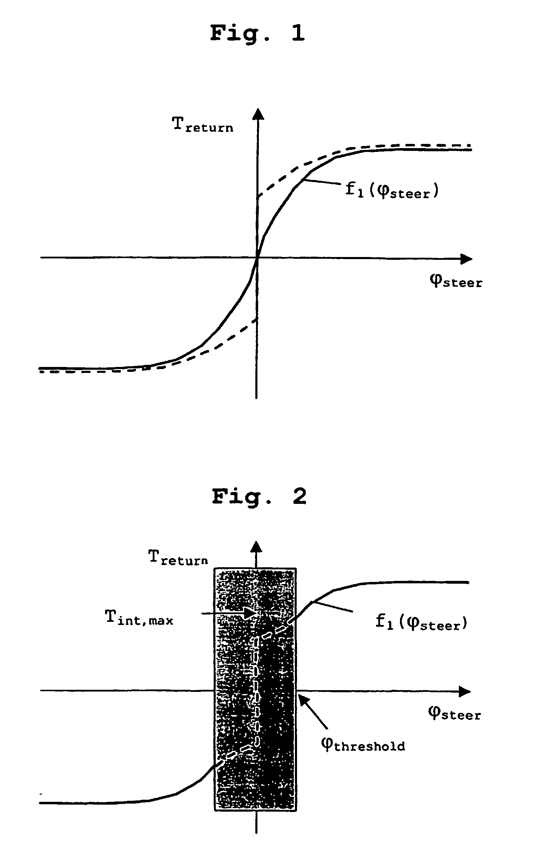

Um eine sehr gute Mittenzentrierung mit minimalem Restwinkel zu erreichen, ist ein Funktionsverlauf für eine Rückstellkraft Voraussetzung, wie er durch die gestrichelte Kurve in Figur 1 dargestellt ist. Dabei wird bis zu einem Lenkradwinkel von 0° (Null Grad) ein Rückstellmoment $T_{return}$ erzeugt, so daß die gelenkten Räder auch bei langsamer Fahrt in die Mittenstellung verstellt werden. Durch die Unstetigkeit im Kurvenverlauf ergibt sich jedoch ein unangenehmes Lenkgefühl beim Lenken durch die Mitte, wenn die das Fahrzeug lenkende Person ihre Hände an der Lenkhandhabe bzw. Lenkrad hat.

Ein harmonisches Lenkgefühl beim Durchlenken durch die Nulllage (Mittenstellung) wird jedoch nur mit einem Momentenverlauf $f_1(\varphi_{steer})$ für das Rückstellmoment $T_{return}$ erzielen, wie er mit der durchgehenden Kurve in Figur 1 dargestellt ist. Mit einem derartigen Ruckstellmoment $T_{return}$ wird jedoch keine exakte Mittenzentrierung erzielt, da durch die Abnahme des Rückstellmoments ein Restwinkel, insbesondere bei kleinen Fahrzeuggeschwindigkeiten und/oder hohem Reibmoment, verbleibt.

Der Erfindung liegt daher die Aufgabe zugrunde, eine Fahrzeuglenkung bereitzustellen, bei der ein harmonisches Lenkgefühl bei gleichzeitig exakter Mittenzentrierung auch bei kleinen Fahrzeuggeschwindigkeiten gegeben ist.

Diese Aufgabe wird erfindungsgemäß mit einer Lenkung mit den Merkmalen des Anspruchs 1 gelöst. Weitere vorteilhafte erfinderische Ausgestaltungen ergeben sich durch die Merkmale der Unteransprüche.

Durch die Erfindung wird vorteilhaft eine hervorragende Mittenzentrierung bei gleichzeitig harmonischem Lenkgefühl durch die Mittellage erzielt. Dies wird dadurch erzielt, daß bei unterschiedlichen Fahrzuständen bzw. Betriebszuständen des Fahrzeugs von der Fahrzeuglenkung unterschiedlich große Rückstellmomente $T_{return}$ vorgegeben bzw. eingeregelt werden. So wird stets dann ein Momentenverlauf $f_1(\varphi_{steer})$, wie er in Figur 1 mit der durchgezogenen Linie dargestellt ist, vorgegeben, wenn die das Fahrzeug lenkende Person ein über einem Schwellwert $T_{threshold}$ liegendes Handmoment auf das Lenkrad aufbringt. Dies ist in der Regel beim aktiven Lenkeingriff durch den Fahrer gegeben. Sobald das Handmoment unter den Schwellwert sinkt, d.h. wenn der Fahrer das Lenkrad losläßt, wird im einfachsten Fall ein Verlauf für das Rückstellmoment vorgegeben, wie er z.B. durch die gestrichelte Kurve in Figur 1 dargestellt ist. Im Sinne der Erfindung ist es jedoch möglich, jeden beliebigen Kurvenverlauf oder auch beliebige andere Funktionen für das Rückstellmoment beim zweiten Fahrzustand vorzugeben bzw. auszuwählen. Es muß lediglich gewährleistet sein, daß eine hinreichend große Rückstellkraft bzw. ein hinreichend großes Rückstellmoment, insbesondere bei kleinen Lenkwinkeln erzeugt wird, so daß die aus der Mittenstellung herausgelenkten Räder in die Mittenstellung bewegt werden.

Um die aus der Mittenstellung herausgelenkten Räder in die Mittenstellung zu bewegen, sind je nach Fahrgeschwindigkeit des Fahrzeugs unterschiedlich große Kräfte notwendig. So sind die hierfur notwendigen Kräfte bei niedrigen Fahrzeuggeschwindigkeiten großer als bei größeren Fahrzeuggeschwindigkeiten. Es ist daher ebenfalls im Sinne der Erfindung, daß das vorgegebene bzw. erzeugte Rückstellmoment bei gleichen Lenkwinkeln im zweiten Betriebs- bzw. Fahrzustand von der Fahrzeuggeschwindigkeit abhängt.

Bei allen möglichen Ausführungsformen ist es dabei möglich, daß der Schwellwert für das Handmoment ein konstanter Wert ist. Es ist jedoch ebenso möglich, daß sich die Schwelle fur das Handmoment, durch welche die beiden für die Erfindung wesentlichen Fahrzustände unterschieden werden, sich mit der Fahrzeuggeschwindigkeit ändert.

In einer einfachsten Ausführungsform wird, wie bereits beschrieben und in Figur 2 dargestellt, dem ersten Fahrzustand ein Rückstellmomentenverlauf $f_1(\varphi_{steer})$ zugeordnet, wie er in Figur 2 mit der durchgezogenen Linie dargestellt ist. Dem zweiten Fahrzustand, d.h. bei einem Handmoment unter dem Schwellwert, wird ein Rückstellmomentenverlauf zugeordnet, wie er durch die gestrichelte Kurve in Figur 2 dargestellt ist. Der Kasten zeigt an, daß die Unterscheidung der beiden Fahrzustände nur für Lenkwinkel $\varphi_{steer}$ erfolgt, die klei-

ner $\varphi_{threshold}$ sind. Die Unterscheidung der Fahrzustände muß aber nicht von $\varphi_{thres\text{-}hold}$ abhängig sein.

In einer zweiten möglichen Ausführungsform wird dem ersten Fahrzustand ebenfalls ein Rückstellmomentenverlauf $f_1(\varphi_{steer})$ zugeordnet, wie er in Figur 1 mit der durchgezogenen Linie dargestellt ist, wodurch ein harmonisches Lenkgefühl beim Lenken durch die Null-Lage des Lenkwinkels $\varphi_{steer}$ realisiert und vermittelt wird. Dem zweiten Fahrzustand, d.h. bei einem Handmoment unter dem Schwellwert, wird ein Rückstellmomentenverlauf $f_1(\varphi_{steer})$ zugeordnet, wie er durch die durchgezogene Linie in Figur 1 dargestellt ist, wobei auf diesen Momentenverlauf ein zusätzliches Moment $T_{int}$ addiert wird. Dieses zusätzliches Moment $T_{int}$ kann ein konstanter Wert sein. Es ist jedoch ebenso möglich, daß das zusätzliche Moment $T_{int}$ eine Funktion von dem Lenkwinkel und/oder der Fahrzeuggeschwindigkeit ist.

Das Rückstellmoment für die beiden Fahrzustände ergibt sich demnach wie folgt:

Fahrzustand I: $\quad T_{return} = f_1(\varphi_{steer})$
Fahrzustand II: $\quad T_{return} = f_2(\varphi_{steer}) = f_1(\varphi_{steer}) + T_{int}$
$\qquad$ oder
$\qquad T_{return} = f_1(\varphi_{steer}) + T_{int}(\varphi_{steer})$ oder
$\qquad T_{return} = f_1(\varphi_{steer}) + T_{int}(\varphi_{steer}, v_{vehicle})$

In einer besonders vorteilhaften Ausführungsform berechnet sich das zusätzliche Moment $T_{int}$ durch eine Integration des Lenkwinkels über die Zeit.

So bestehen theoretisch mehrere Möglichkeiten $T_{int}$ zu berechnen. Im einfachsten Fall wird der Lenkwinkel uber die

$$T_{int} = m \int \dot{\varphi}_{steer} dt$$

Zeit integriert. Das Zusatzmoment $T_{int}$ wird somit bei gleichbleibendem Lenkwinkel mit der Zeit größer. Damit es nicht zu groß wird, ist es sinnvoll $T_{int}$ auf einen Maximalwert $T_{int,max}$ zu begrenzen. $T_{int,max}$ kann dabei z. B. von der Geschwindigkeit und/oder dem Lenkwinkel abhängen. Bei dieser Integralbildung ist die Integrationsgeschwindigkeit nur abhängig von der Konstante m.

Es hat sich gezeigt, daß sich eine komfortablere Lenkung realisieren läßt, wenn die Integrationsgeschwindigkeit ebenfalls von der Fahrzeuggeschwindigkeit abhängt. So läßt sich durch die Verwendung nachfolgender Integralbildung ein hervorragender Fahrkomfort erzielen.

$$T_{int} = \int k(v_{vehicle}) \varphi_{steer} \, dt$$

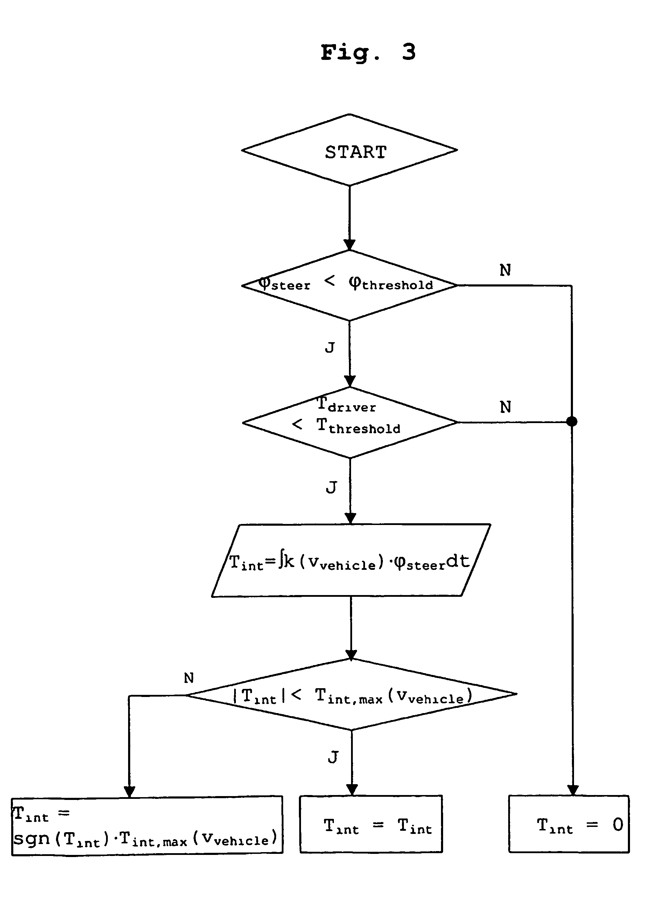

Die Funktion $k(v_{vehicle})$ kann dabei im Prinzip beliebig gewahlt werden. Es hat sich jedoch gezeigt, daß es sinnvoll ist, daß die Integrationsgeschwindigkeit mit zunehmender Fahrzeuggeschwindigkeit zunimmt Durch entsprechende Wahl der Integrationsgeschwindigkeit wird gewährleistet, das beim schnellem Lenken durch die Null-Lage hinweg kein oder nur vernachlässigbar kleines zusätzliches Rückstellmoment $T_{int}$ erzeugt wird. Ein zusätzliches Rückstellmoment $T_{int}$ wird immer nur dann erzeugt, wenn das Lenkrad im Bereich der Nulllage ist und der Fahrer die Hände nicht am Lenkrad hat. Die Figur 3 zeigt ein Flußdiagramm, für die zuletzt erläuterte Ausführungsform.

Für alle in dieser Patentanmeldung beschriebenen Ausführungsformen ist es möglich, daß nur bei kleinen Lenkwinkeln die beiden Fahrzustände aufgrund des auf die Lenkhandhabe bzw. das Lenkrad aufgebrachten Handmoments unterschieden werden, und daß bei über einem Schwellwert $\varphi_{threshold}$ liegenden Lenkwinkel $\varphi_{steer}$ nur ein Rückstellmomentenverlauf $f_1(\varphi_{steer})$ für alle Handmomente existiert. Hierdurch wird vorteilhaft ein Aufintegrieren bei kleinen (vom Fahrer gewollten) Lenkwinkeln verhindert. Der Integrator spricht deshalb nur dann an, wenn das vom Fahrer aufgebrachte Moment $T_{driver}$ einen bestimmten Wert $T_{threshold}$ und der Lenkwinkel $\varphi_{steer}$ einen Schwellwert $\varphi_{threshold}$ unterschreitet.

Es ist zudem bei allen vorbeschriebenen Ausführungsformen möglich, daß auch der Restwinkel $\varphi_{threshold}$ von der Fahrzeuggeschwindigkeit $v_{vehicle}$ abhängt. So ist es für einen guten Fahrkomfort wichtig, daß mit zunehmender Fahrzeuggeschwindigkeit der Restwinkel $\varphi_{threshold}$ kleiner wird.

**Patentansprüche**

1.  Fahrzeuglenkung mit einer Lenkhandhabe zur Lenkung von mindestens einem Rad, wobei die Fahrzeuglenkung eine Einrichtung zum Aufbringen eines Momentes auf die Lenkhandhabe sowie einen Sensor zur Ermittelung des von der das Fahrzeug lenkenden Person auf die Lenkhandhabe aufgebrachten Lenkmomentes $T_{driver}$ aufweist, wobei die Einrichtung ein Rückstellmoment $T_{return}$ erzeugt, welches eine Funktion $f(\varphi_{steer})$ des Lenkwinkels $\varphi_{steer}$ ist und das Rückstellmoment $T_{return}$ die Lenkhandhabe in eine Mittenstellung ($\varphi_{steer} = 0°$) treibt, **dadurch gekennzeichnet, dass**

    - während eines ersten Fahrzustands, bei dem das aufgebrachte Lenkmoment $T_{driver}$ über einem Schwellwert $T_{threshold}$ liegt, der Funktionsverlauf $f_1(\varphi_{steer})$ des Rückstellmoments $T_{return}$ monoton steigend ist und bei einem Lenkwinkel von Null Grad ($\varphi_{steer} = 0°$) kein Rückstellmoment ($T_{return} = 0$) erzeugt wird, und dass

    - bei einem zweiten Fahrzustand, bei dem das Lenkmoment $T_{driver}$ den Schwellwert $T_{threshold}$ unterschreitet, die Einrichtung gegenüber dem Funktionsverlauf $f_1(\varphi_{steer})$ des Rückstellmo-

ments im ersten Fahrzustand zumindest für kleine Lenkwinkel ein größeres Rückstellmoment $T_{return}$ erzeugt.

**2.** Fahrzeuglenkung nach Anspruch 1, **dadurch gekennzeichnet, dass** der Funktionsverlauf $f_2(\varphi_{steer})$ des Rückstellmoments während des zweiten Fahrzustandes abhängig von der Fahrzeuggeschwindigkeit $v_{vehicle}$ ist.

**3.** Fahrzeuglenkung nach Anspruch 1 oder 2, **dadurch gekennzeichnet, dass** sich das resultierende Rückstellmoment $T_{return}$ für den zweiten Fahrzustand aus der Summe von $f_1(\varphi_{steer})$ und einem Zusatzmoment $T_{int}$ zusammensetzt bzw. berechnet.

**4.** Fahrzeuglenkung nach Anspruch 3, **dadurch gekennzeichnet, dass** das Zusatzmoment $T_{int}$ eine Funktion der Fahrzeuggeschwindigkeit $v_{vehicle}$ und/oder des Lenkwinkels $\varphi_{steer}$ ist.

**5.** Fahrzeuglenkung nach einem der Ansprüche 3 oder 4, **dadurch gekennzeichnet, dass** sich das Zusatzmoment $T_{int}$ aus dem Integral

$$T_{int} = m \int \dot{\varphi}_{steer} dt$$

berechnet, wobei m eine Konstante ist.

**6.** Fahrzeuglenkung nach einem der Ansprüche 3 oder 4, **dadurch gekennzeichnet, dass** sich das Zusatzmoment $T_{int}$ aus dem Integral

$$T_{int} = \int k(v_{vehicle}) \varphi_{steer} dt$$

berechnet, wobei k eine geschwindigkeitsabhängige Konstante oder eine Funktion von $v_{vehicle}$ ist.

**7.** Fahrzeuglenkung nach Anspruch 6, **dadurch gekennzeichnet, dass** mit k die Integrationsgeschwindigkeit geregelt wird.

**8.** Fahrzeuglenkung nach Anspruch 6 oder 7, **dadurch gekennzeichnet, dass** die Funktion k ($v_{vehicle}$) monoton steigend ist.

**9.** Fahrzeuglenkung nach einem der Anspruche 3 bis 8, **dadurch gekennzeichnet, dass** $T_{int}$ auf einen Maximalwert $T_{int,max}$ begrenzt ist.

**10.** Fahrzeuglenkung nach Anspruch 9, **dadurch gekennzeichnet, dass** der Maximalwert $T_{int,max}$ eine Funktion von $v_{vehicle}$ ist.

**Claims**

**1.** Vehicle steering with a steering handle for steering at least one wheel, the vehicle steering having a facility for applying a moment to the steering handle and a sensor for determining the steering moment $T_{driver}$ which the person who is steering the vehicle applies to the steering handle, the facility generating a returning moment $T_{return}$, which is a function f ($\varphi_{steer}$) of the steering angle $\varphi_{steer}$, and the returning moment $T_{return}$ propelling the steering handle into a central position ($\varphi_{steer} = 0°$), **characterized in that**

- during a first driving state, in which the applied steering moment $T_{driver}$ is above a threshold value $T_{threshold}$, the course of the function $f_1$ ($\varphi_{steer}$) of the returning moment $T_{return}$ rises monotonically, and at a steering angle of zero degrees ($\varphi_{steer} = 0°$) no returning moment ($T_{return} = 0$) is generated, and that

- in a second driving state, in which the steering moment $T_{driver}$ is below the threshold value $T_{threshold}$, the facility generates a greater returning moment $T_{return}$ compared with the function course $f_1(\varphi_{steer})$ of the returning moment in the first driving state, at least for small steering angles.

**2.** Vehicle steering according to Claim 1, **characterized in that** the function course $f_2(\varphi_{steer})$ of the returning moment during the second driving state depends on the vehicle speed $v_{vehicle}$.

**3.** Vehicle steering according to Claim 1 or 2, **characterized in that** the resulting returning moment $T_{return}$ for the second driving state is made up or calculated from the sum of $f_1(\varphi_{steer})$ and an additional moment $T_{int}$.

**4.** Vehicle steering according to Claim 3, **characterized in that** the additional moment $T_{int}$ is a function of the vehicle speed $v_{vehicle}$ and/or of the steering angle $\varphi_{steer}$.

**5.** Vehicle steering according to one of Claims 3 or 4, **characterized in that** the additional moment $T_{int}$ is calculated from the integral

$$T_{int} = m \int \dot{\varphi}_{steer} dt$$

where m is a constant.

**6.** Vehicle steering according to one of Claims 3 or 4, **characterized in that** the additional moment $T_{int}$ is calculated from the integral

$$T_{int} = \int k(v_{vehicle})\varphi_{steer}dt$$

where k is a speed-dependent constant or a function of $v_{vehicle}$.

7. Vehicle steering according to Claim 6, **characterized in that** the integration speed is regulated using k.

8. Vehicle steering according to Claim 6 or 7, **characterized in that** the function $k(v_{vehicle})$ rises monotonically.

9. Vehicle steering according to one of Claims 3 to 8, **characterized in that** $T_{int}$ is restricted to a maximum value $T_{int,max}$.

10. Vehicle steering according to Claim 9, **characterized in that** the maximum value $T_{int,max}$ is a function of $v_{vehicle}$.

**Revendications**

1. Direction de véhicule automobile avec un élément d'actionnement manuel pour diriger au moins une roue, la direction de véhicule comportant un dispositif destiné à appliquer un couple sur l'élément d'actionnement manuel, ainsi qu'un capteur destiné à déterminer le couple de direction $T_{driver}$ appliqué sur l'élément d'actionnement manuel par la personne guidant le véhicule, le dispositif générant un couple de rappel $T_{return}$, qui est une fonction $f(\varphi_{steer})$ de l'angle de direction $\varphi_{steer}$, et le couple de rappel $T_{return}$ poussant l'élément d'actionnement manuel dans une position centrale ($\varphi_{steer} = 0°$), **caractérisée en ce que**

   - pendant une première situation de conduite, dans laquelle le couple de direction $T_{driver}$ appliqué est supérieur à une valeur de seuil $T_{threshold}$, la courbe de la fonction $f_1(\varphi_{steer})$ du couple de rappel $T_{return}$ suit une pente monotone ascendante et, avec un angle de direction égal à zéro degré ($\varphi_{steer} = 0°$), aucun couple de rappel ($T_{return} = 0$) n'est généré, et **en ce que**
   - pendant une deuxième situation de conduite, dans laquelle le couple de direction $T_{driver}$ est inférieur à, la valeur de seuil $T_{threshold}$, le dispositif génère au moins pour de petits angles de direction un couple de rappel $T_{return}$ plus grand que dans la courbe de la fonction $f_{1(\varphi steer)}$ du couple de rappel $T_{return}$ dans la première situation de conduite.

2. Direction de véhicule selon la revendication 1, **caractérisée en ce que** la courbe de la fonction $f_{2(\varphi steer)}$ du couple de rappel pendant la deuxième situation de conduite est dépendante de la vitesse du véhicule $v_{vehicle}$.

3. Direction de véhicule selon la revendication 1 ou 2, **caractérisée en ce que** le couple de rappel $T_{return}$ résultant pour la deuxième situation de conduite est formé ou calculé à partir de la somme de $f_{1(\varphi steer)}$ et d'un couple supplémentaire $T_{int}$.

4. Direction de véhicule selon la revendication 3, **caractérisée en ce que** le couple supplémentaire $T_{int}$ est une fonction de la vitesse du véhicule $v_{vehicle}$ et/ou de l'angle de direction $\varphi_{steer}$.

5. Direction de véhicule selon l'une des revendications 3 ou 4, **caractérisée en ce que** le couple supplémentaire $T_{int}$ est calculé à partir de l'intégrale

$$T_{int} = m\int \varphi_{steer}dt$$

dans laquelle m est une constante.

6. Direction de véhicule selon l'une des revendications 3 ou 4, **caractérisée en ce que** le couple supplémentaire $T_{int}$ est calculé à partir de l'intégrale

$$T_{int} = \int k(v_{vehicle})\varphi_{steer}dt$$

dans laquelle k est une constante dépendant de la vitesse ou une fonction de $v_{vehicle}$.

7. Direction de véhicule selon la revendication 6, **caractérisée en ce que** la vitesse d'intégration est régulée avec k.

8. Direction de véhicule selon la revendication 6 ou 7, **caractérisée en ce que** la fonction $k(v_{vehicle})$ est une fonction monotone croissante.

9. Direction de véhicule selon l'une des revendications 3 à 8, **caractérisée en ce que** le couple supplémentaire $T_{int}$ est limité à une valeur maximale $T_{int,max}$.

10. Direction de véhicule selon la revendication 9, **caractérisée en ce que** la valeur maximale $T_{int,max}$ est une fonction de $v_{vehicle}$.

# Fig. 1

$T_{return}$

$f_1(\varphi_{steer})$

$\varphi_{steer}$

# Fig. 2

$T_{return}$

$T_{int,max}$

$f_1(\varphi_{steer})$

$\varphi_{threshold}$

$\varphi_{steer}$

# Fig. 3

START

$\varphi_{steer} < \varphi_{threshold}$

N

J

$T_{driver} < T_{threshold}$

N

J

$T_{int} = \int k(v_{vehicle}) \cdot \varphi_{steer} dt$

N

$|T_{int}| < T_{int,max}(v_{vehicle})$

J

$T_{int} = sgn(T_{int}) \cdot T_{int,max}(v_{vehicle})$

$T_{int} = T_{int}$

$T_{int} = 0$